# EUROPEAN PATENT APPLICATION

(11) **EP 3 696 775 A1**
(43) Date of publication of application: **19.08.2020**
(21) Application number: 20155875.6
(22) Date of filing: 06.02.2020
(51) Int. Cl.: G07C 5/00

(54) **ACQUISITION TERMINAL, VEHICLE TRAVEL REPRODUCTION SYSTEM AND ACQUISITION METHOD**

(30) Priority: 18.02.2019 JP 2019026377
(71) Applicant: TOYOTA JIDOSHA KABUSHIKI KAISHA, Toyota-shi, Aichi-ken 471-8571 (JP)
(72) Inventor: INOUE, Naoya, Toyota-shi, Aichi-ken, 471-8571 (JP)
(74) Representative: Kuhnen & Wacker Patent- und Rechtsanwaltsbüro PartG mbB

(57) **Abstract**

An acquisition terminal is provided, which is capable of improving reproduction accuracy of vehicle travel. An acquisition terminal 11 includes: an input/output section 11c connected to a GPS receiver 12 such that location information of a vehicle is input to the input/output section 11c; a transceiver 11b connected to an in-vehicle network 51 of the vehicle such that a message on the in-vehicle network 51 is input to the transceiver 11b; and a microcomputer 11a that generates driving information of the vehicle, which fits a format for reproducing vehicle travel, based on the message input to the transceiver 11b. The microcomputer 11a associates the location information with a receiving time, and furthermore associates the driving information with an input time.

## Description

### Technical Field

The present invention relates to an acquisition terminal, a vehicle travel reproduction system and an acquisition method.

### Background Art

Conventionally, a system in which a vehicle traveling on a real circuit is reproduced on a computer is known (for example, see Patent Document 1).

In the system disclosed in Patent Document 1, a plurality of detectors that detects a vehicle is provided on a real circuit so as to divide the circuit into a plurality of sections. In the system, the location of the vehicle in every section of the circuit is determined on the computer based on a time point when the vehicle passes the detector and an average speed of the vehicle in the corresponding section during a previous lap.

### Prior Art Document

### Patent Document

[Patent Document 1] JP H11-503046 A

### Summary of the Invention

### Problem to Be Solved by the Invention

However, in the system of Patent Document 1, since the location of the vehicle is determined by the average speed during the previous lap, the reproduction accuracy may be lowered.

The present invention was made in consideration of the above circumstances, an object of which is to provide an acquisition terminal, a vehicle travel reproduction system and an acquisition method in which the reproduction accuracy of vehicle travel is improved.

### Means for Solving the Problem

An acquisition terminal of the present invention is to acquire information for reproducing travel of a vehicle. The acquisition terminal includes: a first input section connected to a receiver of a satellite positioning system such that location information of the vehicle is input to the first input section; a second input section connected to an in-vehicle network of the vehicle such that a message on the in-vehicle network is input to the second input section; a generation section configured to generate driving information of the vehicle, which fits a format for reproducing vehicle travel, based on the message input to the second input section; and an association section configured to associate the location information with a time, and furthermore to associate the driving information with a time.

With the above configuration, the travel of the vehicle is reproduced using the location information based on the satellite positioning system and the driving information based on the message on the in-vehicle network. Thus, it is possible to improve the reproduction accuracy of the vehicle travel. Specifically, in addition to the location of the vehicle, it is possible to reproduce the traveling sound, the external/internal appearance and the surrounding environment of the vehicle, which leads to the reproduction corresponding to actual travel (behavior) of the real vehicle. Also, since the location information and the driving information are associated with the respective times, it is possible to appropriately reproduce the travel of the vehicle even when the transmission of the location information and the driving information to a server device is delayed. Also, since the driving information is generated based on the message on the in-vehicle network (i.e. the message on the in-vehicle network is converted into the format for reproducing vehicle travel), it is possible to reduce data processing load on the server device compared to the case in which the message on the in-vehicle network is directly transmitted to the server device so as to be converted.

The above-described acquisition terminal may further include an output section that is connected to a communicator communicating with the server device and that outputs, to the communicator, the location information and the driving information both being associated with the respective times.

The acquisition terminal may further include a determination section configured to determine a model of the vehicle based on the input to the second input section.

In the above-described acquisition terminal, the first input section may be configured such that receiving sensitivity of the receiver is input thereto, and the driving information may include a wheel speed of the vehicle, a horizontal acceleration of the vehicle and a yaw rate of the vehicle.

In the above-described acquisition terminal, the driving information may include at least one piece of information out of: information on a traveling sound of the vehicle; information on an external/internal appearance of the vehicle; and information on a surrounding environment of the vehicle.

A vehicle travel reproduction system of the present invention includes: any one of the above-described acquisition terminals; and a server device configured to store the location information and the driving information that are acquired by the acquisition terminal. The travel of the vehicle is reproduced using the location information and the driving information that are stored in the server device.

The above-described vehicle travel reproduction system may further include an acquisition device configured to acquire information on a race in which the vehicle participates.

In the vehicle travel reproduction system including the above-described acquisition device, the information on the race may include at least one piece of information out of: a start of the race; a goal of the race; a travel regulation in the race; and a weather condition of a venue for the race.

An acquisition method of the present invention is a method for acquiring information for reproducing travel of a vehicle. The method includes the steps of: inputting location information of the vehicle based on a satellite positioning system; inputting a message on an in-vehicle network of the vehicle; generating driving information of the vehicle, which fits a format for reproducing vehicle travel, based on the message input from the in-vehicle network; associating the location information with a time; and associating the driving information with a time.

### Advantageous Effect of the Invention

With the acquisition terminal, the vehicle travel reproduction system and the acquisition method of the present invention, it is possible to improve the reproduction accuracy of vehicle travel.

### Brief Description of the Drawings

[FIG. 1]

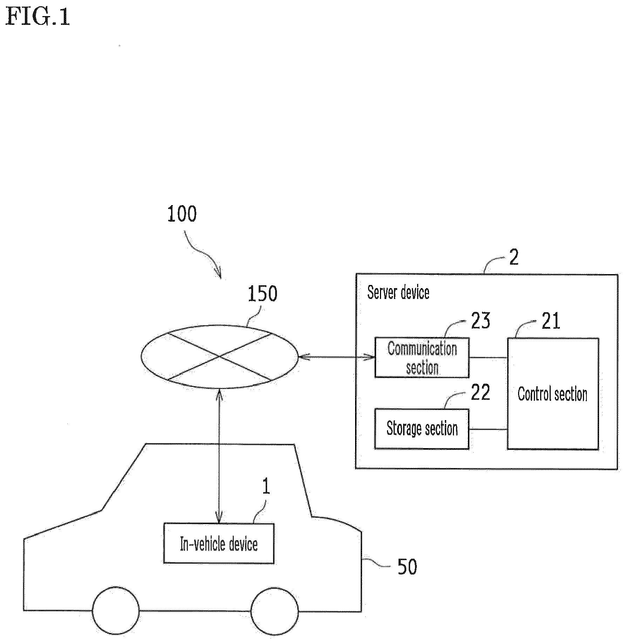

   FIG. 1 is a block diagram illustrating a schematic configuration of a vehicle travel reproduction system according to a first embodiment.
[FIG. 2]

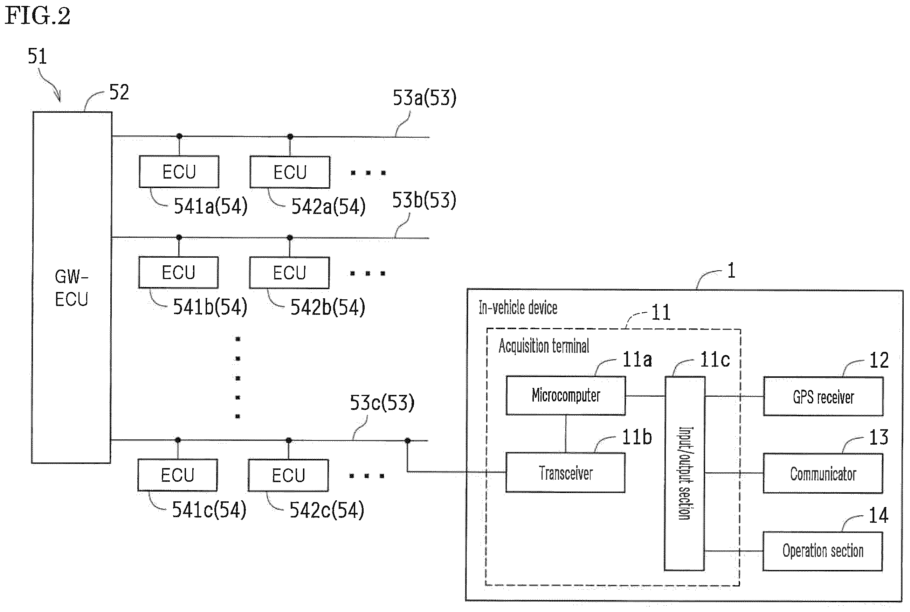

   FIG. 2 is a diagram explaining an in-vehicle device of the vehicle travel reproduction system in FIG. 1.
[FIG. 3]

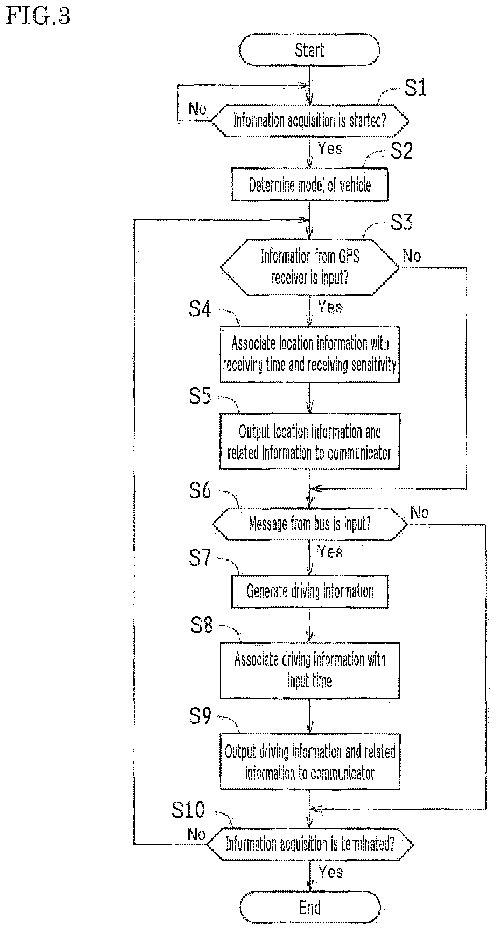

   FIG. 3 is a flowchart explaining an operation of an acquisition terminal according to the first embodiment.
[FIG. 4]

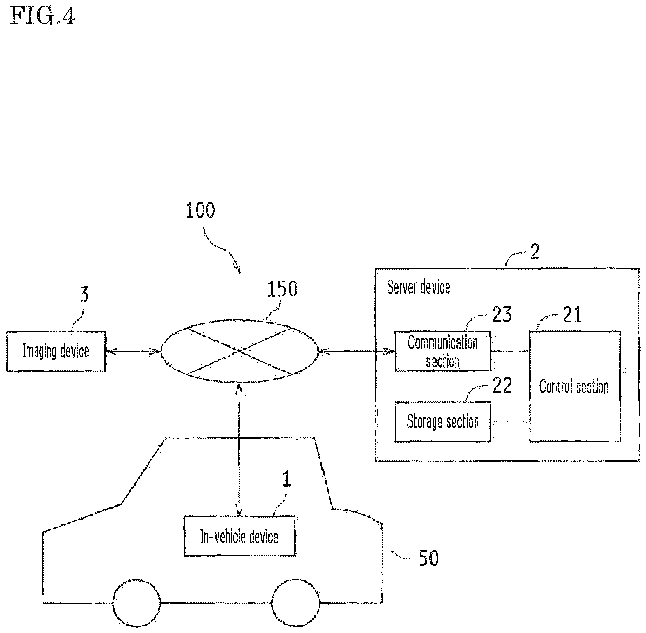

   FIG. 4 is a block diagram illustrating a schematic configuration of a vehicle travel reproduction system according to a second embodiment.

### Description of Embodiments

Hereinafter, an embodiment of the present invention will be described with reference to the drawings.

### (First Embodiment)

Firstly, a vehicle travel reproduction system 100 according to the first embodiment is described with reference to FIGS. 1 and 2.

The vehicle travel reproduction system 100 is provided so as to reproduce travel of a real vehicle 50 on a computer (not shown). As shown in FIG. 1, the vehicle travel reproduction system 100 includes: an in-vehicle device 1 mounted on the vehicle 50; a server device 2 capable of communicating with the in-vehicle device 1; and the computer on which the travel of the vehicle 50 is reproduced. The in-vehicle device 1 and the server device 2 are connected to each other via a network 150. The server device 2 and the computer are also connected to each other via the network 150.

### -In-Vehicle Network-

As shown in FIG. 2, an in-vehicle network 51 is provided in the vehicle 50. The in-vehicle network 51 includes a gateway ECU (hereinafter "GW-ECU") 52 and a plurality of busses 53 connected to the GW-ECU 52. A plurality of ECUs 54 is connected to the respective busses 53.

The ECU 54 includes a CPU, ROM and RAM, and is configured to control respective components of the vehicle 50. The busses 53 are transmission lines when the ECUs 54 communicate. The busses 53 use, for example, a controller area network (CAN) as a communication protocol. The GW-ECU 52 includes a CPU, ROM and RAM, and is provided to relay the communication between the busses 53.

For example, the plurality of busses 53 includes: a bus 53a for powertrain; a bus 53b for vehicle body; a bus 53c for multimedia; a bus for chassis (not shown); and a bus for traveling safety (not shown). To the bus 53a for powertrain, an ECU 541a and an ECU 542a are connected. For example, the ECU 541a is an engine ECU while the ECU 542a is a transmission ECU. To the bus 53b for vehicle body, an ECU 541b and an ECU 542b are connected. For example, the ECU 541b is a body ECU while the ECU 542b is a meter ECU. Also to the bus 53b for vehicle body, for example, an air conditioner ECU and a wiper ECU are connected. To the bus 53c for multimedia, an ECU 541c and an ECU 542c are connected. For example, the ECU 541c is a car navigation ECU while the ECU 542c is an audio ECU. To the bus for chassis, for example, a brake ECU and a power steering ECU are connected. To the bus for traveling safety, for example, an airbag ECU is connected.

When a message is transmitted from the ECU 541a, the message is received by the ECU 542a and the GW-ECU 52 via the bus 53a, then the message is transmitted from the GW-ECU 52 to the bus 53b and the bus 53c. The message transmitted to the bus 53b is received by the ECU 541b and the ECU 542b while the message transmitted to the bus 53c is received by the ECU 541c and the ECU 542c. That is, since the GW-ECU 52 relays the message on the in-vehicle network 51, the ECUs 54 that are respectively connected to the different busses 53 can communicate with each other. When one of the ECUs 54 transmits the message to the bus 53, the remaining ECUs 54 connected to the above bus 53 other than the sender receive the message.

### -In-Vehicle Device-

The in-vehicle device 1 is mounted on the vehicle 50 and configured to acquire information of the vehicle 50. Specifically, the in-vehicle device 1 is configured to acquire location information of the vehicle 50 based on the global positioning system (GPS) and driving information (behavior information) of the vehicle 50 based on the message on the in-vehicle network 51 so as to transmit the above kinds of information to the server device 2 (see FIG. 1). The in-vehicle device 1 includes: an acquisition terminal 11; a GPS receiver 12; a communicator 13; and an operation section 14. The GPS is an example of a "satellite positioning system" of the present invention.

The acquisition terminal 11 is a main body of the in-vehicle device 1, which is provided so as to acquire the information of the vehicle 50. The acquisition terminal 11 includes: a microcomputer 11a; a transceiver 11b; and an input/output section 11c.

The microcomputer 11a includes a CPU, ROM and RAM, and is configured to control the acquisition terminal 11. To the microcomputer 11a, the transceiver 11b as well as the input/output section 11c are connected. The microcomputer 11a is an example of a "generation section", a "determination section" and an "association section" of the present invention.

The transceiver 11b is connected to the bus 53c for multimedia of the in-vehicle network 51. Thus, the transceiver 11b inputs the message on the bus 53c to the microcomputer 11a. The transceiver 11b only refers to the bus 53c and does not send any message to the bus 53c. In this way, connecting the acquisition terminal 11 to the bus 53c does not affect the in-vehicle network 51. The transceiver 11b is an example of a "second input section" of the present invention.

To the input/output section 11c are connected the GPS receiver 12, the communicator 13 and the operation section 14. The input/output section 11c is an example of a "first input section" and an "output section" of the present invention.

GPS receiver 12 is configured to receive a signal from a GPS satellite (not shown) and calculate current location information. Also, the GPS receiver 12 has a function to calculate the receiving time and the receiving sensitivity of the signal from the GPS satellite. Furthermore, the GPS receiver 12 is configured to output the location information, the receiving time and the receiving sensitivity (hereinafter collectively referred to as "GPS information") to the acquisition terminal 11 at a prescribed time interval. The GPS receiver 12 is an example of a "receiver" of the present invention.

The communicator 13 is capable of communicating with the server device 2 via the network 150, and is provided so as to transmit information acquired by the acquisition terminal 11 to the server device 2. The communicator 13 is provided exclusively for the in-vehicle device 1, and is connected to the acquisition terminal 11 by, for example, wireline connection.

The operation section 14 is, for example, a switch. The operation section 14 is provided so as to switch between a state in which information is acquired by the acquisition terminal 11 and a state in which information is not acquired by the acquisition terminal 11.

Here, the in-vehicle device 1 can be applied, for example, to different models of vehicles 50. For this reason, the acquisition terminal 11 stores, in advance, information of the vehicles 50 to which the in-vehicle device 1 can be applied (hereinafter referred to as "applicable vehicle model information") in the ROM of the microcomputer 11a. Also, to the bus 53 of the in-vehicle network 51, information used for determining the model of the vehicle 50 (hereinafter referred to as "vehicle model identification information") is transmitted from, for example, the body ECU at a prescribed time interval. The microcomputer 11a is configured to determine the model of the vehicle 50 on which the in-vehicle device 1 is mounted based on the vehicle model identification information transmitted from the bus 53c and the applicable vehicle model information stored in the ROM. Particularly, the applicable vehicle model information includes the engine type, the transmission type and the place of destination for every vehicle 50 to which the in-vehicle device 1 can be applied while the vehicle model identification information includes the engine type, the transmission type and the place of destination of the vehicle 50. Thus, the vehicle model is identified by checking the vehicle model identification information against the applicable vehicle model information. The vehicle model identification information can be read before the microcomputer 11a identifies the vehicle model.

When the GPS information is input to the input/output section 11c from the GPS receiver 12, the microcomputer 11a associates the location information with the receiving time and the receiving sensitivity so as to output the location information and the related information associated with the location information to the communicator 13. The related information also includes identification information (hereinafter referred to as "terminal ID") to identify the acquisition terminal 11 that acquires the location information and the vehicle model of the vehicle 50 on which the acquisition terminal 11 is mounted. When the location information and the related information are input to the communicator 13 from the acquisition terminal 11, the communicator 13 transmits the location information and the related information to the server device 2.

Also, when the message is input to the transceiver 11b from the bus 53c, the microcomputer 11a generates driving information of the vehicle 50, which fits a format for reproducing vehicle travel, based on the message. Specifically, the ROM of the microcomputer 11a stores a bit assignment table for every vehicle model to which the in-vehicle device 1 can be applied. The microcomputer 11a reads contents of the message using the bit assignment table for the identified vehicle model. That is, the microcomputer 11a can appropriately read the contents of the message even when the bit assignment (communication specification) of the message differs depending on the vehicle model. In other words, the microcomputer 11a is capable of converting the message from the in-vehicle network 51 into the format for reproducing vehicle travel.

The microcomputer 11a associates the driving information of the vehicle 50 based on the message with the input time when the message is input so as to output the driving information and the related information associated with the driving information to the communicator 13. The related information also includes the terminal ID and the vehicle model. When the driving information and the related information are input to the communicator 13 from the acquisition terminal 11, the communicator 13 transmits the driving information and the related information to the server device 2. In the format for reproducing vehicle travel, a particular identification number is set for every information content (for example, a wheel speed that is described later). Thus, it is possible to determine the information content based on the identification number.

### [Driving Information]

The driving information acquired by the acquisition terminal 11 includes: information used for position estimation of the vehicle 50; information on a traveling sound of the vehicle 50; information on an external/internal appearance of the vehicle 50; and information on a surrounding environment of the vehicle 50.

The information used for position estimation of the vehicle 50 includes: a wheel speed; a horizontal acceleration and a yaw rate. For example, a wheel speed sensor for detecting the wheel speed is connected to the brake ECU. When a message including the wheel speed is transmitted from the brake ECU to the bus 53 and furthermore the message is input to the transceiver 11b, the microcomputer 11a generates the driving information with regard to the wheel speed. A linear G sensor for detecting the horizontal acceleration is provided in the airbag ECU. When a message including the horizontal acceleration is transmitted from the airbag ECU to the bus 53 and furthermore the message is input to the transceiver 11b, the microcomputer 11a generates the driving information with regard to the horizontal acceleration. Also, a yaw rate sensor for detecting the yaw rate is provided in the airbag ECU. When a message including the yaw rate is transmitted from the airbag ECU to the bus 53 and furthermore the message is input to the transceiver 11b, the microcomputer 11a generates the driving information with regard to the yaw rate.

The information on the traveling sound of the vehicle 50 includes: an engine rotational speed; an accelerator opening degree; a brake operation amount; and a wheel speed. For example, a crank position sensor for detecting the engine rotational speed is connected to the engine ECU. When a message including the engine rotational speed is transmitted from the engine ECU to the bus 53 and furthermore the message is input to the transceiver 11b, the microcomputer 11a generates the driving information with regard to the engine rotational speed. An accelerator pedal position sensor for detecting the accelerator opening degree is connected to the engine ECU. When a message including the accelerator opening degree is transmitted from the engine ECU to the bus 53 and furthermore the message is input to the transceiver 11b, the microcomputer 11a generates the driving information with regard to the accelerator opening degree. Also, a brake pedal position sensor for detecting the brake operation amount is connected to the brake ECU. When a message including the brake operation amount is transmitted from the brake ECU to the bus 53 and furthermore the message is input to the transceiver 11b, the microcomputer 11a generates the driving information with regard to the brake operation amount.

The information on the external/internal appearance of the vehicle 50 includes: a steering angle correlated with a tire turning angle; a wheel speed; an accelerator opening degree; a brake operation amount; a lighting state of lamps such as a head light; an operation state of a turn signal; an open/closed state of a door; an operation state of a wiper blade; and a wearing state of a seat belt. For example, a steering angle sensor for detecting the steering angle is connected to the power steering ECU. When a message including the steering angle is transmitted from the power steering ECU to the bus 53 and furthermore the message is input to the transceiver 11b, the microcomputer 11a generates the driving information with regard to the steering angle. An operation switch of the lamps is connected to the body ECU. When a message including the lighting state of the lamps is transmitted from the body ECU to the bus 53 and furthermore the message is input to the transceiver 11b, the microcomputer 11a generates the driving information with regard to the lighting state of the lamps. An operation switch of the turn signal is connected to the meter ECU. When a message including the operation state of the turn signal is transmitted from the meter ECU to the bus 53 and furthermore the message is input to the transceiver 11b, the microcomputer 11a generates the driving information with regard to the operation state of the turn signal. A door opening/closing switch is connected to the body ECU. When a message including the open/closed state of the door is transmitted from the body ECU to the bus 53 and furthermore the message is input to the transceiver 11b, the microcomputer 11a generates the driving information with regard to the open/closed state of the door. An operation switch of the wiper blade is connected to the wiper ECU. When a message including the operation state of the wiper blade is transmitted from the wiper ECU to the bus 53 and furthermore the message is input to the transceiver 11b, the microcomputer 11a generates the driving information with regard to the operation state of the wiper blade. Also, a buckle switch for detecting the wearing state of the seat belt is connected to the body ECU. When a message including the wearing state of the seat belt is transmitted from the body ECU to the bus 53 and furthermore the message is input to the transceiver 11b, the microcomputer 11a generates the driving information with regard to the wearing state of the seat belt.

The information on the surrounding environment of the vehicle 50 includes: an outdoor temperature; an operation state of a wiper blade correlated with rainfall; and solar irradiance. For example, an outdoor temperature sensor for detecting the outdoor temperature is connected to the air conditioner ECU. When a message including the outdoor temperature is transmitted from the air conditioner ECU to the bus 53 and furthermore the message is input to the transceiver 11b, the microcomputer 11a generates the driving information with regard to the outdoor temperature. A solar irradiance sensor for detecting the solar irradiance is connected to the air conditioner ECU. When a message including the solar irradiance is transmitted from the air conditioner ECU to the bus 53 and furthermore the message is input to the transceiver 11b, the microcomputer 11a generates the driving information with regard to the solar irradiance.

### -Server Device-

As shown in FIG. 1, the server device 2 is capable of communicating with the in-vehicle device 1 and the computer (not shown) via the network 150. Specifically, the server device 2 is configured to store the location information of the vehicle 50 based on the GPS transmitted from the in-vehicle device 1 and the driving information of the vehicle 50 based on the message on the in-vehicle network 51. The server device 2 includes: a control section 21; a storage section 22; and a communication section 23.

The control section 21 controls the server device 2 by performing arithmetic processing. The storage section 22 stores information and the like transmitted from the in-vehicle device 1. That is, the storage section 22 accumulates the location information and the related information from the GPS receiver 12 and the driving information and the related information from the in-vehicle network 51. The communication section 23 is provided so as to communicate with the in-vehicle device 1 and the computer via the network 150.

### -Reproduction of Vehicle Travel-

Travel of the vehicle 50 is reproduced, for example, on a computer to which the location information and the driving information are sent from the server device 2. This computer stores a program for reproducing travel and information on a vehicle travel path (for example, a circuit). That is, the computer performs the program for reproducing travel using the location information and the driving information sent from the server device 2 so as to reproduce the travel of the vehicle 50. The reproduced vehicle on the computer is used as, for example, a competitor of a racing game.

More specifically, the location of the vehicle 50 is reproduced using: the GPS information; and information used for position estimation out of the driving information. For example, when it is determined, based on receiving sensitivity, that the GPS receiver 12 has high sensitivity, the location and the direction (in vehicle front-back direction) of the vehicle 50 are estimated using the location information by the GPS. In contrast, when it is determined, based on the receiving sensitivity, that the GPS receiver 12 has low sensitivity, the location and the direction of the vehicle 50 are estimated using the wheel speed and the yaw rate. Furthermore, when it is determined that the tire is skidded in the case in which the GPS receiver 12 has low sensitivity, the location is estimated using the horizontal acceleration.

The traveling sound of the vehicle 50 is reproduced using: the GPS information; and information on the traveling sound out of the driving information. The GPS vehicle speed can be calculated using the location information by the GPS. Specifically, the traveling sound is estimated using: the engine rotational speed; the accelerator opening degree; the brake operation amount; the GPS vehicle speed; and the wheel speed. For example, the engine sound is reproduced according to the engine rotational speed while the tire squeal sound is reproduced according to the GPS vehicle speed and the wheel speed.

The external/internal appearance of the vehicle 50 is reproduced using: the GPS information; and information on the external/internal appearance out of the driving information. Specifically, the external/internal appearance is estimated using: the steering angle; the GPS vehicle speed; the wheel speed; the accelerator opening degree; the brake operation amount; the lighting state of the lamps; the operation state of the turn signal; the open/closed state of the door; the operation state of the wiper blade; and the wearing state of the seat belt. For example, the tire turning angle is reproduced based on the steering angle. Also, the respective states of the lamps, the turn signal, the doors, the wiper blade, the seat belts and the like are reproduced.

The surrounding environment of the vehicle 50 is reproduced using: the GPS information; and information on the surrounding environment out of the driving information. Specifically, the surrounding environment is estimated using: the location information by the GPS; the outdoor temperature; the operation state of the wiper blade; and the solar irradiance. For example, the vehicle travel path is estimated from the location information while the rainfall situation is estimated from the operation state of the wiper blade. Also, the outdoor temperature and the solar irradiance are also reproduced on the computer.

### -Operation of Acquisition Terminal-

The operation (acquisition method) of the acquisition terminal 11 according to the first embodiment is described with reference to FIG. 3. Respective steps described below are performed by the microcomputer 11a of the acquisition terminal 11 (see FIG. 2).

In the step S1 in FIG. 3, it is determined whether the information acquisition is started or not. Whether the information acquisition is started or not is determined based on, for example, a turn-on operation of the operation section 14 (see FIG. 2). When it is determined that the information acquisition is started (when the turn-on operation is performed), the procedure advances to step S2. On the other hand, when the information acquisition is not started (when the turn-on operation is not performed), the procedure of step S1 is repeatedly performed. That is, the acquisition terminal 11 is in a stand-by state until the information acquisition is started.

Then, in step S2, the model of the vehicle 50 on which the acquisition terminal 11 is mounted (see FIG. 1) is determined. Specifically, the model of the vehicle 50 is identified by checking the vehicle model identification information input from the bus 53c (see FIG. 2) against the applicable vehicle model information stored in the ROM of the microcomputer 11a.

Next, in step S3, it is determined whether the information from the GPS receiver 12 (see FIG. 2) is input to the input/output section 11c (see FIG. 2) or not. When it is determined that the information from the GPS receiver 12 is input to the input/output section 11c, the procedure advances to step S4. On the other hand, when it is determined that the information from the GPS receiver 12 is not input to the input/output section 11c, the procedure advances to step S6.

Next, in step S4, the location information input from the GPS receiver 12 is associated with the related information. Specifically, the location information by the GPS is associated with its receiving time and its receiving sensitivity, and also with the terminal ID and the vehicle model.

Next, in step S5, the location information by the GPS and the related information associated with the location information are output to the communicator 13 (see FIG. 2). When the location information and the related information are input from the acquisition terminal 11, the communicator 13 transmits the location information and the related information to the server device 2 (see FIG. 1). When the server device 2 receives the location information and the related information from the communicator 13, the server device 2 stores the location information and the related information in the storage section 22 (see FIG. 1).

Next, in step S6, it is determined whether the message from the bus 53c is input to the transceiver 11b (see FIG. 2) or not. When it is determined that the message from the bus 53c is input to the transceiver 11b, the procedure advances to step S7. On the other hand, when it is determined that the message from the bus 53c is not input to the transceiver 11b, the procedure advances to step S10.

Next, in step S7, the driving information that fits the format for reproducing vehicle travel is generated based on the message input to the transceiver 11b. Specifically, the content of the message is read using the bit assignment table for the vehicle model identified in step S2 so as to generate the driving information for reproducing vehicle travel according to the read content. For example, when the content of the message is the engine rotational speed of 1000 rpm, the driving information that indicates the engine rotational speed of 1000 rpm is generated.

Next, in step S8, the driving information based on the message on the in-vehicle network 51 (see FIG. 2) is associated with the related information. In particular, the driving information based on the message is associated with the input time of the message, the terminal ID and the vehicle model.

Next, in step S9, the driving information based on the message on the in-vehicle network 51 and the related information associated with the driving information are output to the communicator 13. When the driving information and the related information are input from the acquisition terminal 11, the communicator 13 transmits the driving information and the related information to the server device 2. When the server device 2 receives the driving information and the related information from the communicator 13, the server device 2 stores the driving information and the related information in the storage section 22.

Next, in step S10, it is determined whether the information acquisition is terminated or not. Whether the information acquisition is terminated or not is determined based on, for example, a turn-off operation of the operation section 14. When it is determined that the information acquisition is not terminated (when the turn-off operation is not performed), the procedure returns to step S3. On the other hand, when it is determined that the information acquisition is terminated (when the turn-off operation is performed), the procedure moves to "END".

### - Effects-

As described above, in the first embodiment, the acquisition terminal 11 includes: the input/output section 11c to which the location information based on the GPS is input; the transceiver 11b to which the message on the in-vehicle network 51 is input; and the microcomputer 11a that generates the driving information that fits the format for reproducing vehicle travel based on the message on the in-vehicle network 51. The microcomputer 11a associates the location information with the receiving time, and also the driving information with the input time. With the above configuration, the travel of the vehicle 50 is reproduced using the location information based on the GPS and the driving information based on the message on the in-vehicle network 51. Thus, it is possible to improve the reproduction accuracy of the vehicle travel. Specifically, in addition to the location of the vehicle 50, it is possible to reproduce the traveling sound, the external/internal appearance and the surrounding environment of the vehicle 50, which leads to the reproduction corresponding to actual travel (behavior) of the real vehicle 50. Also, since the location information is associated with the receiving time while the driving information is associated with the input time, it is possible to appropriately reproduce the travel of the vehicle 50 even when the transmission of the location information and the driving information to the server device 2 is delayed. Also, since the driving information is generated based on the message on the in-vehicle network 51 (i.e. the message on the in-vehicle network 51 is converted into the format for reproducing vehicle travel), it is possible to reduce data processing load on server device 2 compared to the case in which the message on the in-vehicle network is directly transmitted to the server device so as to be converted by the server device. Furthermore, it is not necessary for the server 2 as well as the computer that reproduces the travel to recognize the bit assignment table. The travel of the vehicle 50 can be reproduced using the location information and the driving information.

Also in the first embodiment, the communicator 13 that communicates with the server device 2 is connected to the input/output section 11c. Thus, it is possible to reproduce the travel of the vehicle 50 instantly (in real time) by outputting the location information and the driving information from the input/output section 11c to the communicator 13.

Also in the first embodiment 1, the model of the vehicle 50 is identified based on the applicable vehicle model information stored in the microcomputer 11a and the vehicle model identification information from the in-vehicle network 51. Thus, it is possible to address the different models of vehicles 50 by switching the bit assignment table according to the model of the vehicle 50.

Also in the first embodiment, the receiving sensitivity of the GPS receiver 12 is input to the input/output section 11c, and the information used for position estimation of the vehicle 50 is included in the driving information. Thus, even when the sensitivity of the GPS receiver 12 is low, it is possible to estimate the location and the direction of the vehicle 50 using the information used for the position estimation (i.e. the wheel speed, the horizontal acceleration and the yaw rate).

Also in the first embodiment, since the information on the traveling sound of the vehicle 50 is included in the driving information, it is possible to reproduce the traveling sound of the vehicle 50. Since the information on the external/internal appearance of the vehicle 50 is included in the driving information, it is possible to reproduce the external/internal appearance of the vehicle 50. Since the information on the surrounding environment of the vehicle 50 is included in the driving information, it is possible to reproduce the surrounding environment of the vehicle 50.

### (Second Embodiment)

Secondly, a vehicle travel reproduction system 100a according to the second embodiment is described with reference to FIG. 4. In the second embodiment, the vehicle 50 is a racing vehicle, and an imaging device 3 is provided so as to acquire information on a race in which the vehicle 50 participates. The imaging device 3 is an example of an "acquisition device" of the present invention.

The vehicle travel reproduction system 100a is provided to reproduce, on a computer (not shown), the travel of the real vehicle 50 and an environment of a race in which the vehicle 50 participates. As shown in FIG. 4, the vehicle travel reproduction system 100a includes: the in-vehicle device 1; the server device 2; the imaging device 3; and the computer. The server device 2 and the imaging device 3 are connected via the network 150 so as to communicate with each other.

The imaging device 3 includes, for example: an imaging section provided on a circuit on which the vehicle 50 travels; a control section for calculating information on the race based on imaging results of the imaging section; and a communication section for transmitting the information on the race to the server device 2. Examples of the information on the race include: an event at the start of the race; an event at the goal of the race; travel regulations in the race (i.e. the kinds of racing flags and their usages); and a weather condition of the circuit. The racing flags are used around the circuit to inform drivers of various pieces of information. The circuit is an example of a "venue for a race" of the present invention.

The server device 2 is configured to store the information on the race transmitted from the imaging device 3, in addition to the location information of the vehicle 50 based on the GPS transmitted from the in-vehicle device 1 and the driving information of the vehicle 50 based on the message on the in-vehicle network 51.

The computer reproduces the travel of the vehicle 50 based on the location information and the driving information sent from the server device 2, and furthermore reproduces the race environment based on the information on the race sent from the server device 2. Specifically, the computer performs the program for reproducing travel using the location information, the driving information and the information on the race. Thus, the travel of the vehicle 50 and the race environment are superimposed and reproduced.

In particular, the event at the start and the event at the goal of a real race are reproduced on the computer. When the travel is regulated in the real race, such a regulation is reproduced in the race on the computer. Also, the real weather condition of the circuit is reproduced on the computer. The weather condition of the circuit may be reproduced in consideration of information on the surrounding environment of the vehicle 50.

The other components of the vehicle travel reproduction system 100a are the same as those in the first embodiment.

### - Effects-

In the second embodiment, since the imaging device 3 is provided so as to acquire the information on the race in which the vehicle 50 participates as described above, it is possible to reproduce the race environment. Thus, the travel (behavior) of the vehicle 50 as well as the race environment can be reproduced, which leads to reproduction of the race in which the vehicle 50 participates with high accuracy corresponding to the reality. Also, when the vehicle reproduced on the computer is a competitor of the racing game, it is possible to provide a fair competitive environment in the racing game.

The other effects obtained in the second embodiment are the same as those in the first embodiment.

### (Other Embodiments)

The foregoing embodiments are to be considered in all respects as illustrative and not limiting. The technical scope of the present invention is indicated by the appended claims rather than by the foregoing description, and all modifications and changes that come within the meaning and range of equivalency of the claims are intended to be embraced therein.

For example, in the first embodiment, the CAN is used as the communication protocol of the in-vehicle network 51. However, the present invention is not limited thereto. It is possible to use a communication protocol of the in-vehicle network other than the CAN.

Also in the first embodiment, the busses 53 having the same communication protocol are connected to the GW-ECU 52. However, the present invention is not limited thereto. Busses having different communication protocols may be connected to the GW-ECU that has a function to convert the communication protocols.

Also in the first embodiment, the location information of the vehicle 50 based on the GPS is acquired. However, the present invention is not limited thereto. The location information of the vehicle based on the satellite positioning system other than the GPS may be acquired.

Also in the first embodiment, the acquisition terminal 11 is connected to the bus 53c for multimedia. However, the present invention is not limited thereto. The acquisition terminal may be connected to a bus other than for multimedia.

Also in the first embodiment, the communicator 13 provided exclusively for the in-vehicle device 1 is connected to the acquisition terminal 11 by wireline connection, and communicates with the server device 2. However, the present invention is not limited thereto. A mobile communication terminal owned by a user (for example, a smartphone) may be connected to the acquisition terminal by wireless connection so that the mobile communication terminal communicates with the server device.

Also in the first embodiment, the GPS receiver 12 outputs the GPS information to the acquisition terminal 11 at a prescribed time interval. However, the present invention is not limited thereto. It is possible to configure that the acquisition terminal requests, at a prescribed time interval, the GPS receiver to send the GPS information, and that the GPS receiver outputs the GPS information to the acquisition terminal when the GPS receiver receives the above request.

Also in the first embodiment, the body ECU transmits the vehicle model identification information to the bus 53 at a prescribed time interval. However, the present invention is not limited thereto. It is possible to configure that the acquisition terminal transmits the request of the vehicle model identification information to the bus when the acquisition terminal determines the model of the vehicle, and that the body ECU transmits the vehicle model identification information to the bus when the body ECU receives the request of the vehicle model identification information.

Also in the first embodiment, the information acquisition is started when the operation section 14 is operated to turn on, and the information acquisition is terminated when the operation section 14 is operated to turn off. However, the present invention is not limited thereto. The information acquisition may be started when the vehicle is started to travel, and terminated when the vehicle is stopped.

Also in the first embodiment, the in-vehicle device 1 can be applied to different models of vehicles 50. However, the present invention is not limited thereto. The in-vehicle device may be applied to only one kind of vehicle. In this case, it is not necessary for the acquisition terminal to have the function to determine the kind of vehicle.

Also in the first embodiment, it is possible to provide attachable/detachable storage media such as a SD memory card (not shown) in the acquisition terminal 11 so that the location information and the driving information are accumulated in the storage media attached to the acquisition terminal 11.

The variations as described above in the first embodiment can also be applied to the second embodiment.

In the second embodiment, the imaging device 3 is provided so as to acquire the information on the race in which the vehicle 50 participates. However, the present invention is not limited thereto. The information on the race may be acquired by a device other than the imaging device (for example, a meteorological sensor).

Also in the second embodiment, the imaging device 3 calculates the information on the race based on the imaging results so as to transmit the information to the server device 2. However, the present invention is not limited thereto. It is possible to configure that the imaging device transmits the imaging results to the server device, and that the server device calculates the information on the race based on the received imaging results.

Also in the second embodiment, it is possible to provide an in-vehicle camera (not shown) so that the in-vehicle camera takes images of a driver and transmits them to the server device 2. In this case, the appearance of the driver may be reproduced on the computer based on the imaging results by the in-vehicle camera.

Also in the second embodiment, the information on the race may include the start time of the race, the goal time of the race, a crash of the vehicle 50, incidents on the circuit, and the like.

The present application claims priority to Japanese Patent Application No. 2019-26377, filed on February 18, 2019. The contents of this application are incorporated herein by reference in their entirety.

### Industrial Applicability

The present invention is suitably applied to an acquisition terminal, a vehicle travel reproduction system and an acquisition method for acquiring information for reproducing travel of a vehicle.

### Reference Signs List

- 2: Server device
- 3: Imaging device (acquisition device)
- 11: Acquisition terminal
- 11a: Microcomputer (generation section, determination section and association section)
- 11b: Transceiver (second input section)
- 11c: Input/output section (first input section and output section)
- 12: GPS receiver (receiver)
- 13: Communicator
- 50: Vehicle
- 51: In-vehicle network
- 100, 100a: Vehicle travel reproduction system

## Claims

1. An acquisition terminal acquiring information for reproducing travel of a vehicle, comprising:
a first input section connected to a receiver of a satellite positioning system such that location information of the vehicle is input to the first input section;
a second input section connected to an in-vehicle network of the vehicle such that a message on the in-vehicle network is input to the second input section;
a generation section configured to generate driving information of the vehicle based on the message input to the second input section, the driving information fitting a format for reproducing vehicle travel; and
an association section configured to associate the location information with a time, and furthermore to associate the driving information with a time.

2. The acquisition terminal according to claim 1, further comprising an output section that is connected to a communicator communicating with a server device and that outputs, to the communicator, the location information and the driving information both being associated with the respective times.

3. The acquisition terminal according to claim 1 or 2, further comprising a determination section configured to determine a model of the vehicle based on the input to the second input section.

4. The acquisition terminal according to any one of claims 1 to 3, wherein
the first input section is configured such that receiving sensitivity of the receiver is input to the first input section, and
the driving information includes a wheel speed of the vehicle, a horizontal acceleration of the vehicle and a yaw rate of the vehicle.

5. The acquisition terminal according to any one of claims 1 to 4, wherein
the driving information includes at least one piece of information out of: information on a traveling sound of the vehicle; information on an external/internal appearance of the vehicle; and information on a surrounding environment of the vehicle.

6. A vehicle travel reproduction system comprising:
the acquisition terminal according to any one of claims 1 to 5; and
a server device configured to store the location information and the driving information that are acquired by the acquisition terminal, wherein
the travel of the vehicle is reproduced using the location information and the driving information that are stored in the server device.

7. The vehicle travel reproduction system according to claim 6, further comprising an acquisition device configured to acquire information on a race in which the vehicle participates.

8. The vehicle travel reproduction system according to claim 7, wherein
the information on the race includes at least one piece of information out of: a start of the race; a goal of the race; a travel regulation in the race; and a weather condition of a venue for the race.

9. An acquisition method for acquiring information for reproducing travel of a vehicle, the method comprising the steps of:
inputting location information of the vehicle based on a satellite positioning system;
inputting a message on an in-vehicle network of the vehicle;
generating driving information of the vehicle based on the message input from the in-vehicle network, the driving information fitting a format for reproducing vehicle travel;
associating the location information with a time; and
associating the driving information with a time.
